# EUROPEAN PATENT SPECIFICATION

(11) **EP 3 189 294 B1**
(45) Date of publication and mention of the grant of the patent: **24.06.2020**
(21) Application number: 15791774.1
(22) Date of filing: 02.09.2015
(51) Int. Cl.: F28D 20/02, F24F 5/00, F25B 25/00, F28D 1/04, F28D 7/14, F28F 9/013

(54) **REFRIGERATION OR THERMAL ENERGY STORAGE SYSTEM BY PHASE CHANGE MATERIALS**
KÜHLUNGS- ODER WÄRMEENERGIESPEICHERSYSTEM DURCH PHASENWECHSELMATERIALIEN
SYSTÈME DE STOCKAGE D'ÉNERGIE DE RÉFRIGÉRATION OU THERMIQUE PAR DES MATÉRIAUX À CHANGEMENT DE PHASE

(30) Priority: 04.09.2014 IT RM20140500
(43) Date of publication of application: 12.07.2017
(73) Proprietor: Upgrading Services S.p.A., 70124 Bari (IT); Labor S.r.l., 00186 Roma (IT)
(72) Inventor: DE FALCO, Marcello, 00163 ROMA (IT); ZACCAGNINI, Alessandro, 00076 LARIANO (RM) (IT)
(74) Representative: Santi, Filippo
(86) International application number: PCT/IT2015/000209
(87) International publication number: WO 2016/035105

(56) References cited:
- FR-A1- 2 341 831
- FR-A1- 2 360 833
- FR-A1- 2 454 599
- US-A- 2 996 894
- US-A- 4 696 338

## Description

The present invention relates to a storage system of refrigeration or thermal energy through the use of phase change materials (PCM), in particular for air conditioning or heating of domestic, working, shopping, etc. environments.

More particularly, the invention relates to a system that allows to maximize the transfer of refrigeration or thermal energy between a material of the PCM type and a refrigeration or heating fluid both during storage and release phases of energy from tank storage system, thus increasing the potential applications of cold or heat storage systems, and to optimize the period of withdrawal of energy from the supply main or of use of self-produced energy.

It is known how, in industrial applications, cold storage is carried out by means of ice-water tanks which store frigories by the process of solidification of the water and release the same by the process of liquefaction of the ice. Such systems are integrated with non-standard refrigerators, wherein a solution of water and glycol circulates at a temperature lower than 0° C, in order to cool the water of the primary circuit of the refrigerating machine and thus allowing the solidification of the water with in the storage tank. Working temperatures lower than 0°C, however, limit the use of said ice-water systems in non-industrial field, particularly for conditioning environments. Also, the use of non-standard refrigerators results in a reduction of the Coefficient of Performance (COP) and an increase in the cost of the refrigerating machine. It is also known, to overcome the limitations of the technologies currently available in the industrial field, the use of materials, such as special eutectic alloys, which are known as phase change materials (PCM), which possess a constant phase transition temperature, higher than 0° C and depending on the composition of the alloy. In the literature, many materials of the PCM type are known, each one characterized by a certain degree of toxicity, flammability and supercooling, by its own phase transition temperature and by a low average solid phase thermal conductivity.

In conventional heat exchange systems, such as for example tube bundle and shell exchangers (shell and tube) wherein the fluid of the PCM type is stored within the shell and the exchange fluid is sent into the tubes, formation, inside the storage system tank, of PCM type fluid solid phase directly on the exchange surface involves a transfer of refrigeration energy by conduction rather than by convection, with consequent slow charging times of the tank.

The two proposed solutions currently available to obviate the decrease of the tank conductivity of PCM type materials during the energy storage are microencapsulation of liquid PCM type material and the use of phase change slurries (Phase Change Slurry, PCS). Microencapsulation of liquid PCM material allows to improve the thermal exchange introducing PCM material within suitably shaped capsules, immersed within the volume of primary water within the storage tank, so as to increase the contact surface between the PCM material and water. However, this solution presents several problems, such as not adequate charging times, high costs and excessively bulky systems, due to the reduced volumetric density of energy storage tank, due to packing problems and to the presence of the capsules.

Instead PCS, thanks to the dispersion of droplets or micro-capsules of PCM-type material within a liquid carrier, allow improving the kinetics of energy transfer between the refrigerating PCM type material and liquid carrier and ensuring an additional storage component constituted by the sensible heat of the continuous phase. However, PCS have application problems due to the high viscosity of the fluid to be handled and the reduced energy density storage.

Cold storage systems using PCM type materials currently available have, therefore, two main problems, which limit their potential applications: a charging/discharging power of the systems not adequate and volumetric density storage not satisfactory.

Even the hot storage systems currently available, which employ paraffin, present the same problems of cold storage systems using above said PCM type materials, i.e. a charging/discharging thermal power of the systems not adequate and volumetric density storage not satisfactory.

In the light of the above, the Applicants have realized a refrigeration or thermal energy storage system employing phase change materials (PCM) able to overcome the mentioned above drawbacks.

These results are obtained, according to the present invention, by refrigeration or thermal energy storage system employing PCM-type materials maximizing the transfer of refrigeration or thermal energy, ensuring an intimate contact between a PCM type fluid and a fluid stream flowing within a secondary closed circuit and that is cooled or heated by a heat exchanger.

US 2996894 is the most relevant prior art document known to the Applicants with respect to the solution subject of the present patent application.

It is therefore specific object of the present invention a refrigeration or thermal energy storage system for storing refrigeration or thermal energy to be released when required by users, comprising a body, closed and insulated, said body being configured to contain two fluids within its volume, respectively a Phase Change Material (PCM) type fluid and a secondary fluid, said two fluids being immiscible each other and having different density, so as to be stratified within the volume of said body; withdrawal means configured to draw said secondary fluid from said body, and to convey the same inside a heat exchanger, said heat exchanger being configured to exchange frigories, or calories, with said secondary fluid; and distribution means configured to draw said secondary fluid from said heat exchanger, and to distribute, within said body, said secondary fluid into said PCM type fluid, so as that said secondary fluid exchanges with said PCM type fluid frigories, or calories, absorbed in said heat exchanger, said secondary fluid having a solidification temperature substantially lower than that of said PCM type fluid, said heat exchanger being housed inside said body, and being exchange frigories, or calories, between said secondary fluid and a primary fluid, said heat exchanger comprising a first pipe, connected at its ends respectively to said withdrawal means and to said distribution means, for the circulation of said secondary fluid, and a second pipe, concentric with respect to said first pipe, configured to be connected to a circuit external to said body, for the circulation of said primary fluid.

Preferably, said withdrawal means are placed at least partially in the upper, or lower, part of said body, depending on the density value of said secondary fluid, and in that said distribution means are placed at least partially in the upper, or lower, part of said body, in an opposite manner to the position of said withdrawal means.

Still according to the invention, said volume of said body comprises separation means to prevent the inlet of said PCM type fluid into said withdrawal means. Preferably, according to the invention, said separation means comprise a grid, or a membrane, impermeable to said PCM type fluid and placed so as that only said secondary fluid is substantially present in correspondence of said withdrawal means.

Preferably, according to the invention, said separation means comprise an "S" path to prevent the inlet of said PCM type fluid into said withdrawal means.

Still, according to the invention, said withdrawal means comprises a pump to convey said secondary fluid into said heat exchanger.

Preferably, according to the invention, said distribution means comprise shower nozzles and/or nebulizers and/or hydraulic vortexes to distribute, inside said body, said secondary fluid into said PCM type fluid.

Preferably, according to the invention, said secondary fluid is present within said body with a percentage in volume preferably between 5% and 50%.

Preferably, according to the invention, said secondary fluid has a density greater than that of said PCM type fluid.

Preferably, according to the invention, said secondary fluid is water.

Furthermore, according to the invention, a storage plant to store refrigeration or thermal energy to be released when required, comprising a refrigeration or thermal energy storage system as described in the above; a refrigeration or thermal unit connected to said heat exchanger, and configured to release frigories or calories to a primary fluid when said system is in a refrigeration or thermal energy storage configuration, so as that said frigories, or calories are later released by said primary fluid to said secondary fluid in said heat exchanger, and further later exchanged between said secondary fluid and said PCM type fluid inside said body; users, connected to said heat exchanger so as that, when said system is in a energy release configuration, said PCM type fluid exchanges frigories, or calories, with said secondary fluid inside said body, and later said secondary fluid releases said frigories, or calories, to said primary fluid in said heat exchanger, and further later said primary fluid releases said frigories, or calories, to said users; and a valves and pumps system for the circulation of said primary fluid so as that said system can pass from a refrigeration or thermal energy storage configuration to a energy release configuration, and vice versa.

Still according to the invention, said refrigeration or thermal unit is connected to said heat exchanger and to said users, so as that, said refrigeration or thermal unit exchanges frigories or calories with said primary fluid, and later said primary fluid exchanges frigories or calories with said secondary fluid in said heat exchanger and with said users, and in that said valves and pumps system allows to operate in a refrigeration, or thermal, energy storage mode releasing frigories or calories to said secondary fluid in said heat exchanger or to said users or to both of them at the same time, and in a refrigeration or thermal energy release mode with release of frigories or calories to said primary fluid by said secondary fluid in said heat exchanger or by part of said refrigeration or thermal unit or by both of them at the same time.

The present invention will be now described for illustrative, but not limitative purposes, with particular reference to the drawings of the enclosed figures, wherein:
figure 1 shows a perspective view of one embodiment of a refrigeration energy storage system by means of phase change materials (PCM) according to the invention;
figure 2 shows a perspective view of the body of the system of figure 1, without the cover, the side wall and the insulating material;
figure 3 shows a perspective top view of the body of figure 2;
figures 4a, 4b and 4c respectively show a first perspective view of the heat exchanger contained inside the body of figure 2, a second perspective view of said heat exchanger, and a perspective view of a detail of the heat exchanger shown in figure 4a;
figure 5 schematically shows an embodiment of an integrative system to prevent the admission of a PCM type fluid within the heat exchanger of figure 2; figure 6 shows a block diagram of a first embodiment of a circuit for the integration of the storage system according to the invention with a refrigeration system and with a user; and
figure 7 shows a block diagram of a second embodiment of a circuit for the integration of the storage system according to the invention with a refrigeration system and with a user.

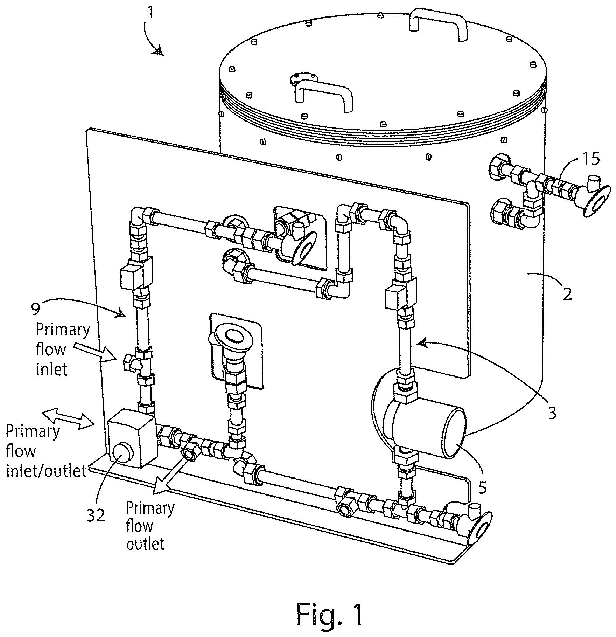

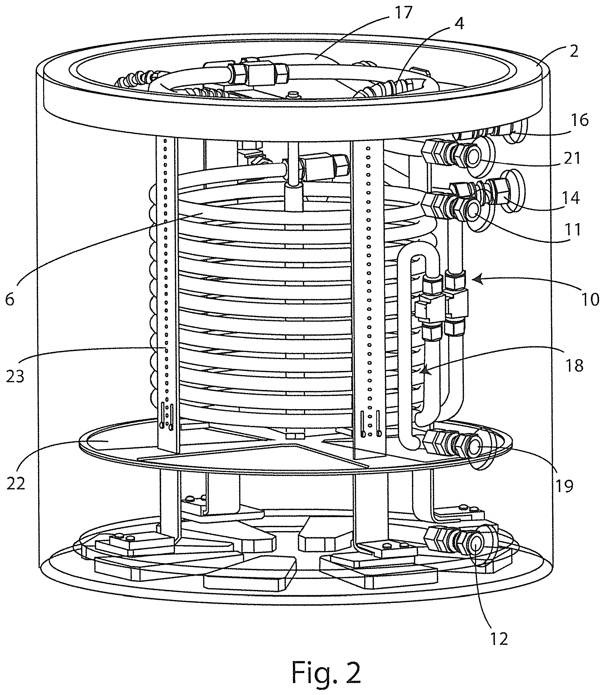

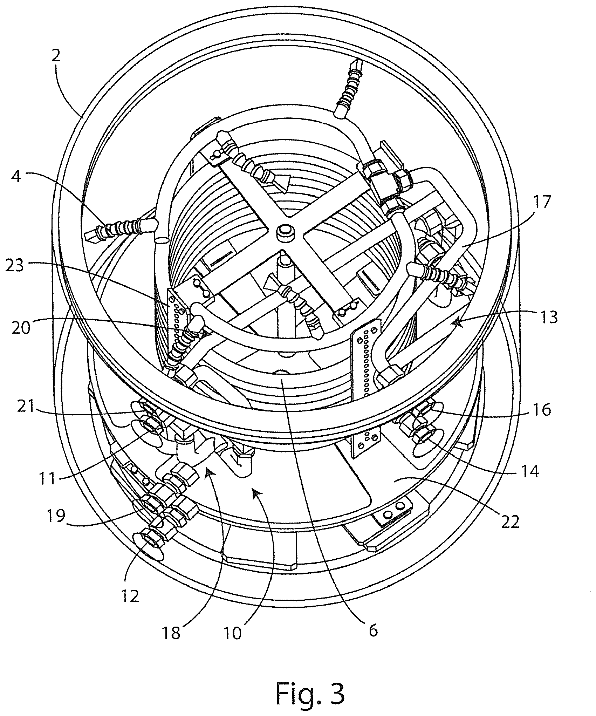

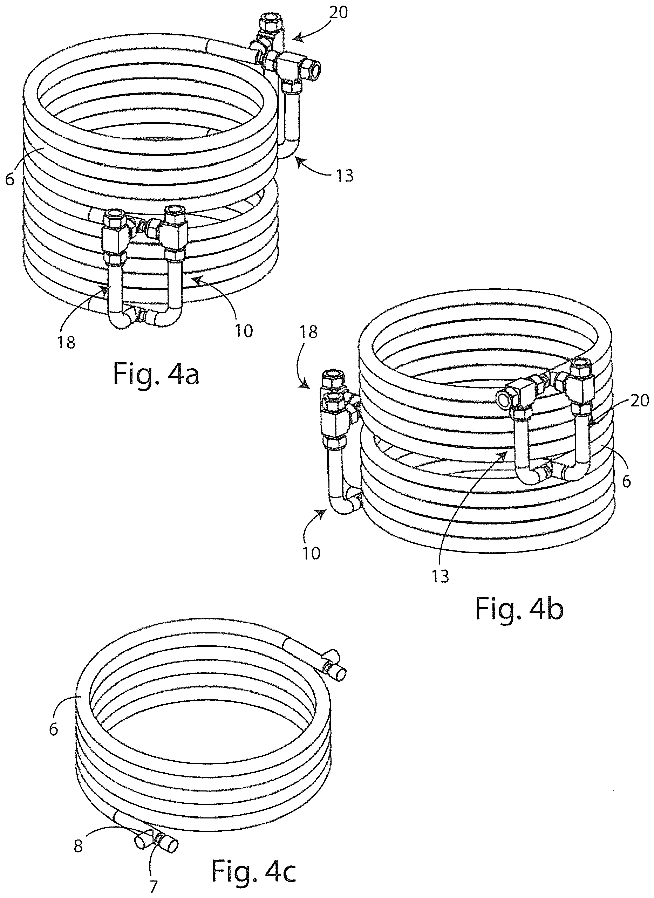

Making reference now to figures 1, 2, 3, 4a, 4b and 4c, it is shown an embodiment of a refrigeration, or thermal storage system according to the present invention, generally indicated by reference number 1. Said storage system 1 comprises a tank 2 for storage of refrigeration energy, a secondary circuit 3 and a system of showers or nebulizers 4, contained within the volume of the tank 2.

Said tank 2 can be any insulated, closed, body of appropriate size to kWh to be stored and configured to contain within its volume a PCM type fluid and a secondary fluid, immiscible each other and having different density. In particular, said body is preferably cylindrical.

Physical characteristics of said fluids determine the layering of the same within the volume of the storage tank 2, with the consequent possibility of withdrawing the secondary fluid, depending on the density value of the latter, from the top or the bottom of tank 2.

In the following, the description of the storage system 1 will be made with reference to a secondary fluid having a density greater than that of the type PCM fluid, but it should be understood that the elements distinguishing system 1 does not vary according to the type of secondary fluid employed.

In the embodiment shown, said PCM type fluid has a solidification temperature preferably equal to 5°C, while said secondary fluid, present within said tank 2 with a volume rate preferably between 5% and 50%, has a solidification temperature lower than that of said PCM type fluid.

Said secondary circuit 3 comprises a pump 5 for displacement of secondary fluid from inside the tank 2 towards a heat exchanger 6 and from this to the system showers or nebulizers 4.

Said heat exchanger 6 is preferably comprised of a system of double concentric tubes circular coils and is housed within said tank 2 and immersed within the PCM type fluid volume. In the embodiment shown, said coil system is comprised by two identical coils connected together to operate in parallel.

Secondary fluid circulates within inner tube 7 of said heat exchanger 6, while a primary fluid circulates in counter current within the outer tube 8, entering and exiting in and from a refrigeration system (not shown in these figures) by means of a primary circuit 9. it is evident that the two fluids may also circulate in co-current.

Said inner tube 7 of said heat exchanger 6 is connected, through a system of pipes 10, to a pipe union 11, the latter being connected, through the secondary circuit 3, to a pipe union 12 of the tank 2; said means 12, 3, 11 and 10 allow the flow of the secondary fluid from the storage tank 2 to the heat exchanger 6. Said inner tube 7 is also connected, through a system of pipes 13, to a pipe union 14, the latter being connected, by means of a circuit 15, to a pipe union 16, connected, through a system of pipes 17, to the showers or nebulizers system 4; said means 13, 14, 15, 16 and 17 allow the flow of the secondary fluid from heat exchanger 6 to the showers or nebulizers system 4.

Said outer pipe 8 is connected, through a system of pipes 18, to a pipe union 19, and, through a system of pipes 20, to a pipe union 21, connected to said pipe union 19 through the primary circuit 9; said means 9, 18, 19, 21 and 20 allow the flow of the primary fluid in, and from, the heat exchanger 6.

The showers or nebulizers system 4 is present in the upper part of the storage tank 2, for uniform distribution on the surface, and then in the PCM type fluid volume, of droplets of secondary fluid coming from the heat exchanger 6.

Separation means 22 are housed within the volume of the tank 2, to prevent the release of the type PCM fluid in the secondary circuit 3. Particularly, said separation means comprise a grid, disposed in such a way that only said secondary fluid is substantially present in correspondence with the nozzle 12.

Said heat exchanger 6, said showers or nebulizers system 4 and said separation means 22 are supported by a beam system 23.

Operation of the storage system 1 according to the present invention provides for the withdrawal of the secondary fluid from the bottom of the tank 2 and the circulation of said fluid, thanks to the pump 5, within the secondary circuit 3, in the heat exchanger 6 and in the circuit 15, until reaching the system showers or nebulizers system 4.

Secondary fluid absorbs frigories within the heat exchanger 6, during the storage of refrigerating energy within tank 2, and releases frigories during the release phase of refrigerating energy of tank 2, from, and to, the primary fluid circulating within said heat exchanger heat 6. Primary fluid is cooled by a refrigeration system during the storage of refrigeration energy within tank 2, while during the release phase of refrigerating energy from tank 2, before being sent to a final user, it is cooled by the current of the secondary fluid.

Secondary fluid, coming from heat exchanger 6, is introduced within the tank 2 through the showers or nebulizers system 4, which ensures a uniform distribution of the droplets of the secondary fluid in the PCM type fluid volume. The droplets of secondary fluid evenly run down along the PCM type fluid head optimally transferring refrigeration energy from secondary fluid to the PCM type fluid during the storage of refrigerating energy in tank 2 and by the PCM type fluid to the secondary fluid during the release phase of refrigerating energy from tank 2, so as to obtain, respectively, the solidification of the liquid PCM type fluid and the fusion of the solid PCM type fluid. Also, since the PCM type fluid solidifies creating crystals that are dispersed within the liquid volume, and in intimate contact with the droplets of the secondary fluid, in order to improve the mixing and make sure that the PCM type fluid solidifies by means of a high number of small crystals, secondary fluid can be introduced within tank 2 by means of spays having a suitable speed.

Solidification of PCM type fluid during the storage of refrigerating energy in tank 2, thus permits storage, in storage tank 2, of refrigerating energy which is then released during the release phase of refrigerating energy from tank 2, through the fusion of the solid PCM type fluid.

By the solution proposed according to the present invention it is maximized the energy transfer between the refrigeration fluid and the secondary PCM type fluid. The direct contact between said fluids, their different physical characteristics and the showers or nebulizers system guarantee, in fact, an excellent heat exchange efficiency and a rapid transfer of refrigerating energy, with consequent increase of the refrigeration capacity both during the phase of storage of refrigerating energy and during the release phase of refrigerating energy.

Particularly, showers or nebulizers system, by generating droplets of secondary fluid that evenly run down the PCM type fluid head, allows increasing the contact surface for heat exchange and, due to viscous forces, ensures handling the type PCM fluid, improving energy transportation coefficients.

Being then the type PCM fluid confined within the tank, it is prevented a movement of the type PCM fluid, under phase change conditions, especially during energy storage, that could generate operational problems such as blockage of pipelines or rupture the pumps. Furthermore, the reduced time of energy storage and release from storage tank allow the use of the storage system according to the present invention to optimize the energy withdrawal period from the main supply or of use of self-produced energy.

Another embodiment of the present invention provides the application of coatings on the inner surface of the pipes in which circulates the secondary fluid, avoiding the adhesion of the solid PCM type fluid.

According to a further embodiment of the present invention, the storage tank 2 can have cubic shape, conical shape, frustum-conical shape, parallelepiped shape, etc. and/or composite shape obtained by the union of one or more of the mentioned above shapes. According to another embodiment of the present invention, structures having a rough surface, such as filaments, grids or nets, immersed within the PCM type fluid volume, in order to promote and manage the formation of first PCM type fluid crystals during storage of refrigeration energy.

A further embodiment of the present invention involves the use of ultrasound systems, or similar systems, in order to facilitate the formation of first PCM type fluid crystals during the storage of refrigeration energy by tank 2 and thus reduce the eventual supercooling effect of PCM type fluid.

Another embodiment of the present invention involves the use of only the PCM type fluids and of the primary fluid, thereby avoiding the use of a secondary circuit. In this configuration, it is the primary fluid which, descending through the PCM type fluid head, releases, during the storage phase, and absorbs, during the release phase, the refrigerating energy.

According to a further example which does not fall under the present invention, the heat exchanger 6 may be located outside the storage tank 2, in order to increase the PCM type fluid volume the that can be contained within the tank 2, and/or different technologies may be used compared to the double concentric pipes coils system, such as rube bundle exchanger, plate exchangers, horizontal or vertical exchangers, shirt exchangers.

Another embodiment of the present invention provides the use of separation means different from the grid, such as a selective membrane to only the secondary fluid, placed on the surface or within the secondary fluid volume.

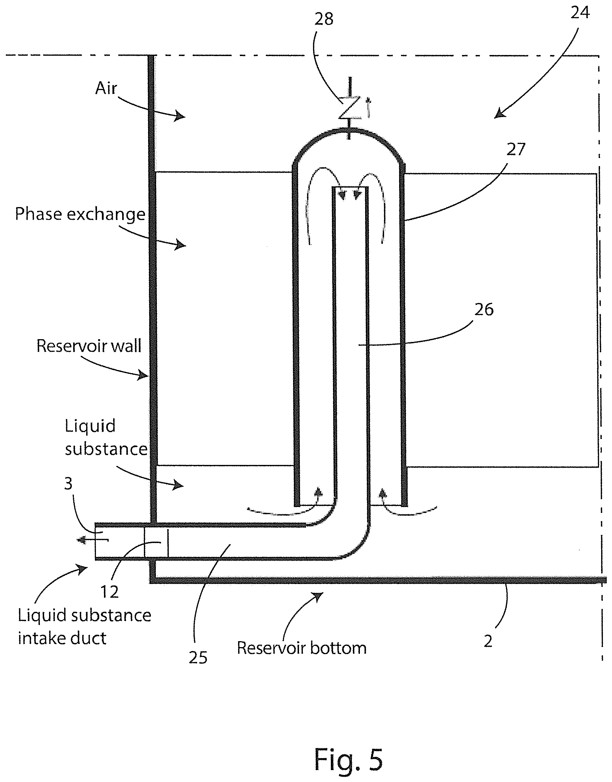

According to another embodiment of the present invention (shown in figure 5), to prevent the admission of PCM type fluid in the secondary circuit 3 following the operation of the pump 5, they may be used, instead of the systems 24 lengthening the path of secondary fluid to enter into a pump 5 suction duct 25, connected directly or through the union pipe 12 to the secondary circuit 3. Particularly, in the embodiment shown, the suction duct 25 provides a vertical extension 26, protected by a conduit 27 coaxial thereto and of greater diameter, closed from the upper side and with a possible valve 28 which, if necessary, allows purging by suction. Said optional device can be usefully employed in the case in which density of the liquid PCM type fluid is less than that of the secondary fluid while the density of PCM type solid PCM type fluid is higher than that of said secondary fluid. In this situation, separation devices 22 may permit the passage of solid particles of small diameter of PCM type fluid. The presence of said devices 24 can ensure an additional level of separation, avoiding that the particles of solid PCM type fluid deposited on the bottom occlude the suction duct 25.

Another embodiment of the present invention provides the use of movable, continuous and discrete showers or nebulizers systems.

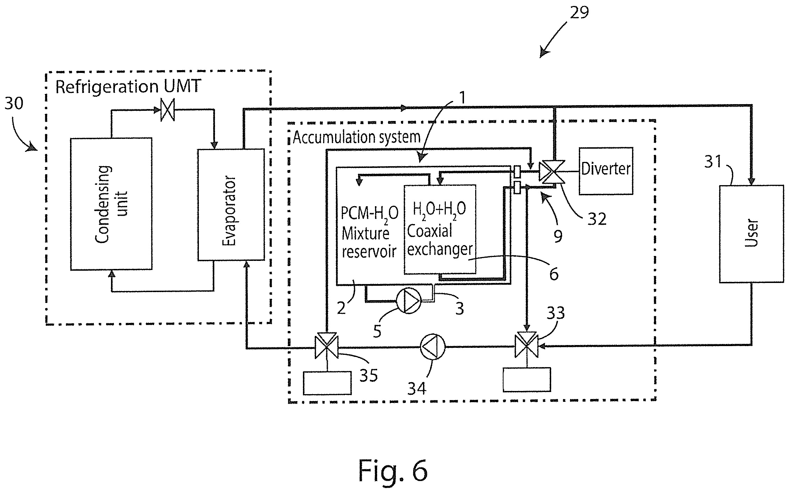

Referring now to figure 6, there is shown a first embodiment of a circuit 29 for the integration of the cold storage system 1 according to the present invention with a refrigerator group 30 and a user 31, arranged functionally in parallel each other.

Said circuit 29 comprises a three-way diverting valve 32, in a 0% or 100% mode, a three-way mixing valve 33, a pump 34 for moving the primary fluid through the circuit valve 29 and a three-way diverting valve 35.

In the following, the description of the circuit 29 will be made with reference to a heat exchanger 6 in which the primary fluid and the secondary fluid circulate in counter current, but it should be understood that the elements distinguishing the circuit does not vary if the two fluids circulate in co-current.

Said valve 32 allows, during the storage of refrigerating energy, the flow of the primary fluid, cooled by the refrigerator group 30, in the heat exchanger 6, while, during the release phase of refrigerating energy, allows the flow of the primary fluid, cooled by the secondary fluid circulating in the heat exchanger 6, towards the user 31.

If during the storage of refrigerating energy it is provided the transfer of frigories from the primary fluid either to the user 31 and to the secondary fluid, the mixing valve 33 allows the mixing of the primary fluid coming from the heat exchanger 6 with the primary fluid coming 31 from the user, by sending the mixed fluids to the intake of pump 34 and then in the refrigerator group 30. If, instead, during the storage of refrigerating energy it is provided only the transfer of refrigeration from the cooled primary fluid to the secondary fluid, said mixing valve 33 allows only the circulation of the primary fluid coming from the heat exchanger 6 to the intake of pump 34 and then in the refrigerator group 30.

Moreover, during the release phase of refrigerating energy, said valve 33 allows only the circulation of the primary fluid coming from the user 31 to the intake of the pump 34.

Said diverting valve 35 enables, during the storage of refrigerating energy, the flow of the primary fluid leaving the heat exchanger 6 through the valve 33 and then through the pump 34, toward the refrigeration group 30, while, during the phase of release of refrigerating energy, allows the flow of the primary fluid coming from the user 31 through the valve 33, and then through the pump 34, toward the refrigeration group 30 and/or to the heat exchanger 6.

The operation of the circuit 29 according to the present invention provides that, during the storage of refrigerating energy, the primary fluid cooled by the refrigeration group 30 can refrigerate the secondary fluid circulating in the heat exchanger 6 and/or provide the refrigeration power required by the user 31. However, during the release phase of refrigerating energy, the refrigerating power required by the user 31 can be provided by the primary fluid cooled by the refrigeration unit 30 and/or the primary fluid cooled by the secondary fluid circulating in the heat exchanger 6.

Therefore, the integration proposed according to the present invention of the cold storage system with a refrigeration system and a user allows to optimize the withdrawal period of the energy from the mains, reducing load peaks (peak shaving), or the use of self-produced energy.

In fact, frigories, or part of frigories, required by the user during the peak hours may be supplied from the cold storage tank, previously loaded during the non-peak time period, with a consequent reduction of the peak power and increase the refrigerating machines COP. Moreover, the presence of the cold storage tank in the circuit 29, operating to support the refrigerating machine, allows to reduce the power of the latter, with a consequent reduction of production costs, and of the price, of the refrigerating machine. By the application of a suitable management system of the energy flows, it is possible to operate the refrigerating machine at constant, or nearly constant, power, and at the optimum operation point (greater COP), by providing the peaks of refrigeration energy required by the user to the storage system.

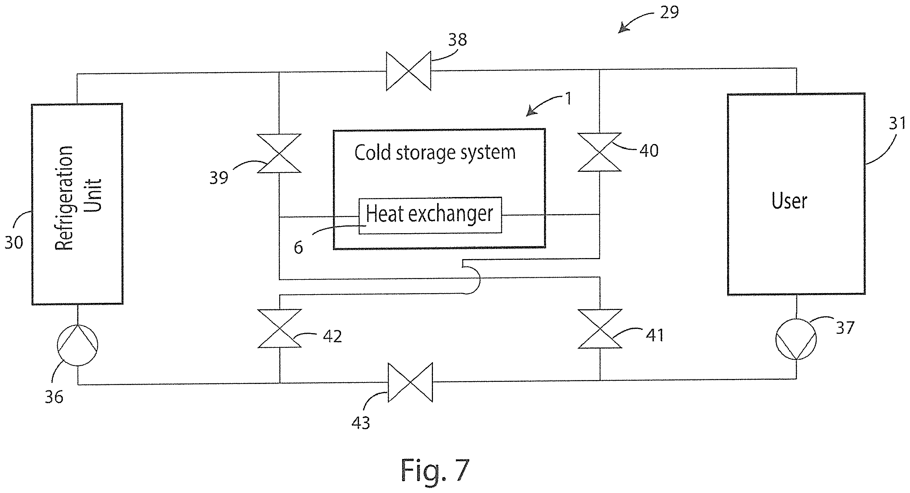

Making reference to figure 7, there is shown a second embodiment of the circuit 29 for the integration of the cold storage system 1 according to the present invention with a refrigeration group 30 and a user 31, functionally arranged both in parallel and in series. Said circuit 29 comprises two pumps 36, 37 and six two-way valves 38, 39, 40, 41, 42 and 43. By varying the combination of the opened valves and of the closed valves, it is possible, both during storage phase and release phase of refrigerating energy, to make the circuit operating either with in parallel and series configurations.

Particularly, keeping closed valves 40 and 41 and opened valves 43 and 42, an operation of energy storage in parallel is obtained, which can be managed by modulating the opening of valves 38 and 39.

Keeping instead closed valves 39 and 42 and opened valves 43 and 40, an operation of energy release in parallel is obtained, which can be managed by modulating the opening of valves 38 and 41.

Keeping closed valves 38, 41 and 42 and opened valves 39, 40 and 43, an operation of energy storage in series is obtained, while keeping closed valves 39, 40 and 43 and opened valves 38, 41 and 42, an operation of energy release in series is obtained. In configurations in series, the primary fluid undergoes progressive thermal jumps, passing from the refrigeration group 30 to the heat exchanger 6 to the user 31, and vice versa.

The present invention has been described for illustrative but not limitative purposes, according to its preferred embodiments, but it is to be understood that variations and/or modifications may be made by those skilled in the art without departing from the relative scope of protection, as defined by the appended claims.

## Claims

1. Refrigeration or thermal energy storage system (1) for storing refrigeration or thermal energy to be released when required by users, comprising
a body (2), closed and insulated, said body (2) being configured to contain two fluids within its volume, respectively a Phase Change Material (PCM) type fluid and a secondary fluid, said two fluids being immiscible each other and having different density, so as to be stratified within the volume of said body (2);
withdrawal means (3) configured to draw said secondary fluid from said body (2), and to convey the same inside a heat exchanger (6), said heat exchanger (6) being configured to exchange frigories, or calories, with said secondary fluid; and
distribution means (4) configured to draw said secondary fluid from said heat exchanger (6), and to distribute, within said body (2), said secondary fluid into said PCM type fluid, so as that said secondary fluid exchanges with said PCM type fluid frigories, or calories, absorbed in said heat exchanger (6),
said secondary fluid having a solidification temperature substantially lower than that of said PCM type fluid,
said heat exchanger (6) comprising a first pipe (7), connected at its ends respectively to said withdrawal means (3) and to said distribution means (4), for the circulation of said secondary fluid,
said energy storage system (1) being **characterized in that**
said heat exchanger (6) is housed inside said body (2), and being exchange frigories, or calories, between said secondary fluid and a primary fluid,
and **in that** a second pipe (8), concentric with respect to said first pipe, is configured to be connected to a circuit (9) external to said body (2), for the circulation of said primary fluid.

2. System (1) according to the precedent claim, **characterized in that** said withdrawal means (3) are placed at least partially in the upper, or lower, part of said body (2), depending on the density value of said secondary fluid, and **in that** said distribution means (4) are placed at least partially in the upper, or lower, part of said body (2), in an opposite manner to the position of said withdrawal means (3).

3. System (1) according to one of the precedent claims, **characterized in that** said volume of said body (2) comprises separation means (22) to prevent the inlet of said PCM type fluid into said withdrawal means (3).

4. System (1) according to claim 3, **characterized in that** said separation means (22) comprise a grid, or a membrane, impermeable to said PCM type fluid and placed so as that only said secondary fluid is substantially present in correspondence of said withdrawal means (3).

5. System (1) according to claim 3, **characterized in that** said separation means comprise an "S" path to prevent the inlet of said PCM type fluid into said withdrawal means (3).

6. System (1) according to one of the precedent claims, **characterized in that** said withdrawal means (3) comprises a pump (5) to convey said secondary fluid into said heat exchanger (6).

7. System (1) according to one of the precedent claims, **characterized in that** said distribution means (4) comprise shower nozzles and/or nebulizers and/or hydraulic vortexes to distribute, inside said body (2), said secondary fluid into said PCM type fluid.

8. System (1) according to one of the precedent claims, **characterized in that** said secondary fluid is present within said body (2) with a percentage in volume preferably between 5% and 50%.

9. System (1) according to one of the precedent claims, **characterized in that** said secondary fluid has a density greater than that of said PCM type fluid.

10. System (1) according to one of the precedent claims, **characterized in that** said secondary fluid is water.

11. Storage plant (29) to store refrigeration or thermal energy to be released when required, comprising
a refrigeration or thermal energy storage system (1) according to one of the claims 1-10;
a refrigeration or thermal unit (30) connected to said heat exchanger (6), and configured to release frigories, or calories, to a primary fluid when said system (29) is in a refrigeration, or thermal, energy storage configuration, so as that said frigories, o calories, are later released by said primary fluid to said secondary fluid in said heat exchanger (6), and further later exchanged between said secondary fluid and said PCM type fluid inside said body (2);
users (31), connected to said heat exchanger (6) so as that, when said system (29) is in a energy release configuration, said PCM type fluid exchanges frigories, or calories, with said secondary fluid inside said body (2), and later said secondary fluid releases said frigories, or calories, to said primary fluid in said heat exchanger (6), and further later said primary fluid releases said frigories, or calories, to said users (31); and
a valves and pumps system for the circulation of said primary fluid so as that said system (29) can pass from a refrigeration, or thermal, energy storage configuration to a energy release configuration, and vice versa.

12. Storage plant (29) according to claim 11, **characterized in that** said refrigeration, or thermal, unit (30) is connected to said heat exchanger (6) and to said users (31), so as that, said refrigeration, or thermal, unit (30) exchanges frigories, or calories, with said primary fluid, and later said primary fluid exchanges frigories, or calories, with said secondary fluid in said heat exchanger (6) and with said users (31), and **in that** said valves and pumps system allows to operate in a refrigeration, or thermal, energy storage mode releasing frigories, or calories, to said secondary fluid in said heat exchanger (6) or to said users (31) or to both of them at the same time, and in a refrigeration, or thermal, energy release mode with release of frigories, or calories, to said primary fluid by said secondary fluid in said heat exchanger (6) or by part of said refrigeration, or thermal, unit (30) or by both of them at the same time.

## Patentansprüche

1. Kühl- oder Wärmeenergiespeichersystem (1) zum Speichern von Kühl- oder Wärmeenergie, die, wenn sie von Verbrauchern angefordert wird, freigegeben wird, umfassend
einen Körper (2), der geschlossen und isoliert ist, wobei der Körper (2) dazu konfiguriert ist, zwei Fluide innerhalb seines Volumens zu enthalten, jeweils ein Fluid vom Typ eines Phasenwechselmaterials (PCM) und ein sekundäres Fluid, wobei die zwei Fluide miteinander unvermischbar sind und eine unterschiedliche Dichte aufweisen, sodass sie schichtig innerhalb des Volumens des Körpers (2) vorliegen;
ein Entnahmemittel (3), das dazu konfiguriert ist, das sekundäre Fluid aus dem Körper (2) abzuziehen und dasselbe innerhalb eines Wärmetauschers (6) zu befördern, wobei der Wärmetauscher (6) dazu konfiguriert ist, Frigorien oder Kalorien mit dem sekundären Fluid auszutauschen; und
ein Verteilungsmittel (4), das dazu konfiguriert ist, das sekundäre Fluid aus dem Wärmetauscher (6) abzuziehen und das sekundäre Fluid innerhalb des Körpers (2) in das Fluid vom PCM-Typ zu verteilen, sodass das sekundäre Fluid mit dem Fluid vom PCM-Typ in dem Wärmetauscher (6) absorbierte Frigorien oder Kalorien austauscht,
wobei das sekundäre Fluid eine Erstarrungstemperatur aufweist, die wesentlich niedriger als die des Fluids vom PCM-Typ ist;
wobei der Wärmetauscher (6) ein erstes Rohr (7) umfasst, das für die Zirkulation des sekundären Fluids an seinen Enden mit dem Entnahmemittel (3) bzw. mit dem Verteilungsmittel (4) verbunden ist,
wobei das Energiespeichersystem (1) **dadurch gekennzeichnet ist, dass**
der Wärmetauscher (6) in den Körper (2) eingehaust ist und dazu konfiguriert ist, Frigorien oder Kalorien zwischen dem sekundären Fluid und einem primären Fluid auszutauschen,
und dass ein zweites Rohr (8), das bezüglich des ersten Rohrs konzentrisch ist, dazu konfiguriert ist, für die Zirkulation des primären Fluids mit einem sich außerhalb des Körpers (2) befindenden Kreislauf (9) verbunden zu sein.

2. System (1) nach dem vorstehenden Anspruch, **gekennzeichnet dadurch, dass** das Entnahmemittel (3) zumindest teilweise in dem oberen oder unteren Teil des Körpers (2) platziert ist, abhängig von dem Dichtewert des sekundären Fluids, und dadurch, dass das Verteilungsmittel (4) in einer zu der Position des Entnahmemittels (3) gegensätzlichen Weise zumindest teilweise in dem oberen oder unteren Teil des Körpers (2) platziert ist.

3. System (1) nach einem der vorstehenden Ansprüche, **dadurch gekennzeichnet, dass** das Volumen des Körpers (2) ein Trennmittel (22) umfasst, um die Einströmung des Fluids vom PCM-Typ in das Entnahmemittel (3) zu verhindern.

4. System (1) nach Anspruch 3, **dadurch gekennzeichnet, dass** das Trennmittel (22) ein Gitter oder eine Membran umfasst, die für das Fluid vom PCM-Typ undurchdringbar ist und so platziert ist, dass im Wesentlichen lediglich das sekundäre Fluid gemäß dem Entnahmemittel (3) vorliegt.

5. System (1) nach Anspruch 3, **dadurch gekennzeichnet, dass** das Trennmittel einen "S"-Pfad umfasst, um die Einströmung des Fluids vom PCM-Typ in das Entnahmemittel (3) zu verhindern.

6. System (1) nach einem der vorstehenden Ansprüche, **dadurch gekennzeichnet, dass** das Entnahmemittel (3) eine Pumpe (5) umfasst, um das sekundäre Fluid in den Wärmetauscher (6) zu befördern.

7. System (1) nach einem der vorstehenden Ansprüche, **dadurch gekennzeichnet, dass** das Verteilungsmittel (4) Brausedüsen und/oder Zerstäuber und/oder hydraulische Wirbelröhren umfasst, um das sekundäre Fluid innerhalb des Körpers (2) in das Fluid vom PCM-Typ zu verteilen.

8. System (1) nach einem der vorstehenden Ansprüche, **dadurch gekennzeichnet, dass** das sekundäre Fluid innerhalb des Körpers (2) mit einem Volumenprozentsatz vorzugsweise zwischen 5 % und 50 % vorliegt.

9. System (1) nach einem der vorstehenden Ansprüche, **dadurch gekennzeichnet, dass** das sekundäre Fluid eine Dichte aufweist, die größer als die des Fluids vom PCM-Typ ist.

10. System (1) nach einem der vorstehenden Ansprüche, **dadurch gekennzeichnet, dass** das sekundäre Fluid Wasser ist.

11. Speicheranlage (29) zum Speichern von Kühl- oder Wärmeenergie, die, wenn sie angefordert wird, freigegeben wird, umfassend
ein Kühl- oder Wärmeenergiespeichersystem (1) nach einem der Ansprüche 1 bis 10;
eine Kühl- oder Wärmeeinheit (30), die mit dem Wärmetauscher (6) verbunden ist und dazu konfiguriert ist, Frigorien oder Kalorien an ein primäres Fluid freizusetzen, wenn sich das System (29) in einer Kühl- oder Wärmeenergiespeicherkonfiguration befindet, sodass die Frigorien oder Kalorien später durch das primäre Fluid an das sekundäre Fluid in dem Wärmetauscher (6) freigesetzt werden und weiter später innerhalb des Körpers (2) zwischen dem sekundären Fluid und dem Fluid vom PCM-Typ ausgetauscht werden;
Verbraucher (31), die mit dem Wärmetauscher (6) verbunden sind, sodass, wenn sich das System (29) in einer Energiefreisetzungskonfiguration befindet, das Fluid vom PCM-Typ innerhalb des Körpers (2) Frigorien oder Kalorien mit dem sekundären Fluid austauscht und später das sekundäre Fluid die Frigorien oder Kalorien an das primäre Fluid in dem Wärmetauscher (6) freisetzt und weiter später das primäre Fluid die Frigorien oder Kalorien an die Verbraucher (31) freisetzt; und
ein Ventil- und Pumpensystem für die Zirkulation des primären Fluids, sodass das System (29) aus einer Kühl- oder Wärmeenergiespeicherkonfiguration in eine Energiefreisetzungskonfiguration und umgekehrt übergehen kann.

12. Speicheranlage (29) nach Anspruch 11, **gekennzeichnet dadurch, dass** die Kühl- oder Wärmeeinheit (30) mit dem Wärmetauscher (6) und mit den Verbrauchern (31) verbunden ist, sodass die Kühl- oder Wärmeeinheit (30) Frigorien oder Kalorien mit dem primären Fluid austauscht und später das primäre Fluid Frigorien oder Kalorien mit dem sekundären Fluid in dem Wärmetauscher (6) und mit den Verbrauchern (31) austauscht, und dadurch, dass das Ventil- und Pumpensystem es ermöglicht, in einem Kühl- oder Wärmeenergiespeichermodus zu arbeiten, in dem Frigorien oder Kalorien an das sekundäre Fluid in dem Wärmetauscher (6) und an die Verbraucher (31) oder an beide zu derselben Zeit freigesetzt werden, und in einem Kühl- oder Wärmeenergiefreisetzungsmodus zu arbeiten, mit einer Freisetzung von Frigorien oder Kalorien an das primäre Fluid durch das sekundäre Fluid in dem Wärmetauscher (6) oder durch einen Teil der Kühl- oder Wärmeeinheit (30) oder durch beide zu derselben Zeit.

## Revendications

1. Système de stockage d'énergie de réfrigération ou thermique (1) destiné à stocker de l'énergie de réfrigération ou thermique devant être libérée lorsqu'elle est requise par des utilisateurs, comprenant
un corps (2), fermé et isolé, ledit corps (2) étant conçu pour contenir deux fluides à l'intérieur de son volume, respectivement un fluide de type matériau à changement de phase (PCM) et un fluide secondaire, lesdits deux fluides étant immiscibles l'un par rapport à l'autre et possédant une densité différente, afin d'être stratifiés à l'intérieur du volume dudit corps (2) ;
des moyens de retrait (3) conçus pour aspirer ledit fluide secondaire à partir dudit corps (2), et pour le transporter à l'intérieur d'un échangeur thermique (6), ledit échangeur thermique (6) étant configuré pour échanger des frigories, ou des calories, avec ledit fluide secondaire ; et
des moyens de distribution (4) conçus pour aspirer ledit fluide secondaire à partir dudit échangeur thermique (6), et pour distribuer, à l'intérieur dudit corps (2), ledit fluide secondaire dans ledit fluide de type PCM, afin que ledit fluide secondaire échange, avec ledit fluide de type PCM, des calories, ou des frigories, absorbées dans ledit échangeur thermique (6),
ledit fluide secondaire possédant une température de solidification sensiblement inférieure à celle dudit fluide de type PCM,
ledit échangeur thermique (6) comprenant un premier tuyau (7), raccordé au niveau de ses extrémités respectivement auxdits moyens de retrait (3) et auxdits moyens de distribution (4), pour la circulation dudit fluide secondaire,
ledit système de stockage d'énergie (1) étant **caractérisé en ce que**
ledit échangeur thermique (6) est logé à l'intérieur dudit corps (2), et échange des frigories, ou des calories, entre ledit fluide secondaire et un fluide primaire,
et **en ce qu'**un second tuyau (8), concentrique par rapport audit premier tuyau, est conçu pour être raccordé à un circuit (9) externe audit corps (2), pour la circulation dudit fluide primaire.

2. Système (1) selon la revendication précédente, **caractérisé en ce que** lesdits moyens de retrait (3) sont placés au moins partiellement dans la partie supérieure, ou inférieure, dudit corps (2), en fonction de la valeur de densité dudit fluide secondaire, et **en ce que** lesdits moyens de distribution (4) sont placés au moins partiellement dans la partie supérieure, ou inférieure, dudit corps (2), d'une manière opposée à la position desdits moyens de retrait (3).

3. Système (1) selon l'une des revendications précédentes, **caractérisé en ce que** ledit volume dudit corps (2) comprend des moyens de séparation (22) pour empêcher l'entrée dudit fluide de type PCM dans lesdits moyens de retrait (3).

4. Système (1) selon la revendication 3, **caractérisé en ce que** lesdits moyens de séparation (22) comprennent une grille, ou une membrane, imperméable audit fluide de type PCM et placée de sorte que seul ledit fluide secondaire est sensiblement présent en correspondance desdits moyens de retrait (3).

5. Système (1) selon la revendication 3, **caractérisé en ce que** lesdits moyens de séparation comprennent un trajet en « S » pour empêcher l'entrée dudit fluide de type PCM dans lesdits moyens de retrait (3).

6. Système (1) selon l'une des revendications précédentes, **caractérisé en ce que** lesdits moyens de retrait (3) comprennent une pompe (5) pour acheminer ledit fluide secondaire dans ledit échangeur thermique (6).

7. Système (1) selon l'une des revendications précédentes, **caractérisé en ce que** lesdits moyens de distribution (4) comprennent des pommes de douche et/ou des nébuliseurs et/ou des tourbillons hydrauliques pour distribuer, à l'intérieur dudit corps (2), ledit fluide secondaire dans ledit fluide de type PCM.

8. Système (1) selon l'une des revendications précédentes, **caractérisé en ce que** ledit fluide secondaire est présent à l'intérieur dudit corps (2) avec un pourcentage en volume de préférence entre 5 % et 50 %.

9. Système (1) selon l'une des revendications précédentes, **caractérisé en ce que** ledit fluide secondaire possède une densité supérieure à celle dudit fluide de type PCM.

10. Système (1) selon l'une des revendications précédentes, **caractérisé en ce que** ledit fluide secondaire est de l'eau.

11. Installation de stockage (29) pour stocker de l'énergie de réfrigération ou thermique devant être libérée lorsqu'elle est nécessaire, comprenant
un système de stockage d'énergie de réfrigération ou thermique (1) selon l'une des revendications 1 à 10 ;
une unité de réfrigération ou thermique (30) raccordée audit échangeur thermique (6), et conçue pour libérer des frigories, ou des calories, vers un fluide primaire lorsque ledit système (29) est dans une configuration de stockage d'énergie de réfrigération ou thermique, de sorte que lesdites frigories, ou calories, sont libérées par la suite par ledit fluide primaire vers ledit fluide secondaire dans ledit échangeur thermique (6), et échangées en outre par la suite entre ledit fluide secondaire et ledit fluide de type PCM à l'intérieur dudit corps (2) ;
des utilisateurs (31), raccordés audit échangeur thermique (6) de sorte que, lorsque ledit système (29) est dans une configuration de libération d'énergie, ledit fluide de type PCM échange des frigories, ou des calories, avec ledit fluide secondaire à l'intérieur dudit corps (2), et par la suite, ledit fluide secondaire libère lesdites frigories, ou calories, vers ledit fluide primaire dans ledit échangeur thermique (6), et par la suite en outre, ledit fluide primaire libère lesdites frigories, ou calories, vers lesdits utilisateurs (31) ; et
un système de soupapes et de pompes pour la circulation dudit fluide primaire de sorte que ledit système (29) peut passer d'une configuration de stockage d'énergie de réfrigération ou thermique à une configuration de libération d'énergie, et vice versa.

12. Installation de stockage (29) selon la revendication 11, **caractérisée en ce que** ladite unité de réfrigération ou thermique (30) est raccordée audit échangeur thermique (6) et auxdits utilisateurs (31), de sorte que ladite unité de réfrigération ou thermique (30) échange des frigories, ou des calories, avec ledit fluide primaire, et par la suite, ledit fluide primaire échange des frigories, ou des calories, avec ledit fluide secondaire dans ledit échangeur thermique (6) et avec lesdits utilisateurs (31), et **en ce que** ledit système de soupapes et de pompes permet de fonctionner dans un mode de stockage d'énergie de réfrigération ou thermique libérant des frigories, ou des calories, vers ledit fluide secondaire dans ledit échangeur thermique (6) ou vers lesdits utilisateurs (31) ou les deux en même temps, et dans un mode de libération d'énergie de réfrigération ou thermique avec libération de frigories, ou de calories, vers ledit fluide primaire par ledit fluide secondaire dans ledit échangeur thermique (6) ou par une partie de ladite unité de réfrigération ou thermique (30) ou par les deux en même temps.
